# EUROPEAN PATENT SPECIFICATION

(11) **EP 3 599 151 B1**
(45) Date of publication and mention of the grant of the patent: **13.07.2022**
(21) Application number: 18212579.9
(22) Date of filing: 14.12.2018
(51) Int. Cl.: B62L 3/08, B60T 8/26

(54) **A HYDRAULIC ACTUATOR FOR A COMBINED REAR-FRONT BRAKING SYSTEM OF A MOTORCYCLE**
HYDRAULISCHER AKTUATOR FÜR EIN KOMBINIERTES HECK-FRONT-BREMSSYSTEM EINES MOTORRADS
ACTIONNEUR HYDRAULIQUE POUR SYSTÈME DE FREINAGE COMBINÉ ARRIÈRE-AVANT D'UNE MOTOCYCLETTE

(30) Priority: 25.07.2018 IT 201800007503
(43) Date of publication of application: 29.01.2020
(73) Proprietor: RAICAM DRIVELINE S.r.l., 12084 Mondovì (CN) (IT)
(72) Inventor: PORRO, Emanuela, I-12084 MONDOVÌ (CN) (IT); BONARDO, Sandro, I-12084 MONDOVÌ (CN) (IT)
(74) Representative: Fioravanti, Corrado

(56) References cited:
- EP-A1- 3 048 035
- EP-A1- 3 075 617
- WO-A1-2015/181798
- WO-A1-2017/093891
- CN-U- 206 012 862
- JP-A- H09 109 978
- JP-A- H10 218 071

## Description

### Technical field

The present invention relates to a hydraulic actuator for a combined rear-front braking system of a motorcycle, particularly a scooter.

### Background art

Combined rear-front braking system for motorcycles having a hydraulically actuated front brake and a mechanically operated rear brake are known in the art. The manual control that activates the rear brake, through a mechanical cable, simultaneously also controls, by means of a sheath, a hydraulic actuator that simultaneously activates the front brake. On most current motorcycles, especially scooters, the front brake is of the disc type while the rear brake is a drum brake.

The mechanical cable which actuates the rear brake passes near the actuator that operates the front hydraulic brake, externally thereto, and acts on an actuating lever, rotatably connected to the actuator body. The rotational movement of the lever activates a piston, which sends the brake fluid to the front brake calliper of the motorcycle. See, for example, CN 206012862 U, EP 3148851 A1, EP 3075617 B1.

WO 2015/181798 A1 discloses a hydraulic actuator for a combined rear-front braking system of a motorcycle, the actuator comprising an actuator body having an axially extending through cavity, a hydraulic chamber within the actuator body, an inlet duct in fluid communication with the hydraulic chamber for letting a brake fluid into the hydraulic chamber, a delivery duct in fluid communication with the hydraulic chamber for sending brake fluid from the hydraulic chamber to a front hydraulic brake of the motorcycle, and a tubular piston mounted coaxially slidable in the through cavity of the actuator body. The tubular piston is at least partially inserted into the hydraulic chamber and has an axially extending through cavity for the passage of a rod for actuating a rear brake of the motorcycle. Said document discloses the features of the preamble of claim 1.

### Summary of the invention

It is an object of the present invention to provide a hydraulic actuator having particular characteristics of compactness and effectiveness, and having a simplified structure with respect to the prior art.

The above and other objects and advantages, which will be better understood hereinafter, are achieved, according to an aspect of the present invention, by a hydraulic actuator having the features defined in claim 1. Preferred embodiments of the actuator are defined in the dependent claims.

In summary, a hydraulic actuator comprises a body having a through cavity configured to let a mechanical actuation cable of a rear brake of a motorcycle through it. The mechanical cable actuating the rear brake passes through the inside of the actuator body, rather than passing out of it and being connected to the actuator by a linkage. The cable may be connected in a thrust relationship to a tubular piston inside the actuator. With this arrangement, the conventional external linkage of the actuator is advantageously dispensed with, the overall number of components is reduced, making it easier to make use of plastic components. A compact structure is also provided, which optimizes the functionality of the actuator.

According to another not claimed aspect, the invention provides a combined front-rear braking system for a motorcycle, wherein the system comprises a hydraulically actuated front brake, a mechanically operated rear brake, a first mechanical control mechanically connected to the rear brake by a mechanical cable, a second hydraulic control for controlling only the front brake via a hydraulic conduit, and a hydraulic actuator, which is hydraulically connected to the front brake. The hydraulic actuator is hydraulically connected also to the second hydraulic control, and is also mechanically connected to the first mechanical control in order to be operable through said mechanical cable.

### Brief description of the drawings

The features and advantages of the present invention will become clearer from the ensuing detailed description, given purely by way of non-limiting example. Reference is made to the attached drawings, in which:
Figures 1, 2 and 3 are perspective views, from different angles, of an actuator according to an embodiment of the invention;
Figure 4 is a longitudinal cross-sectional view of the actuator of Figures 1 to 3;
Figure 5 is a diagram illustrating a combined rear-front braking system of a motorcycle that includes an actuator according to Figures 1 to 4;
Figures 6 and 7 are two longitudinal cross-sectional views of another embodiment of an actuator according to the present invention, in two different operating positions; and
Figures 8 and 9 are two longitudinal cross-sectional views of another embodiment of an actuator according to the present invention, in two different operating positions.

### Detailed description

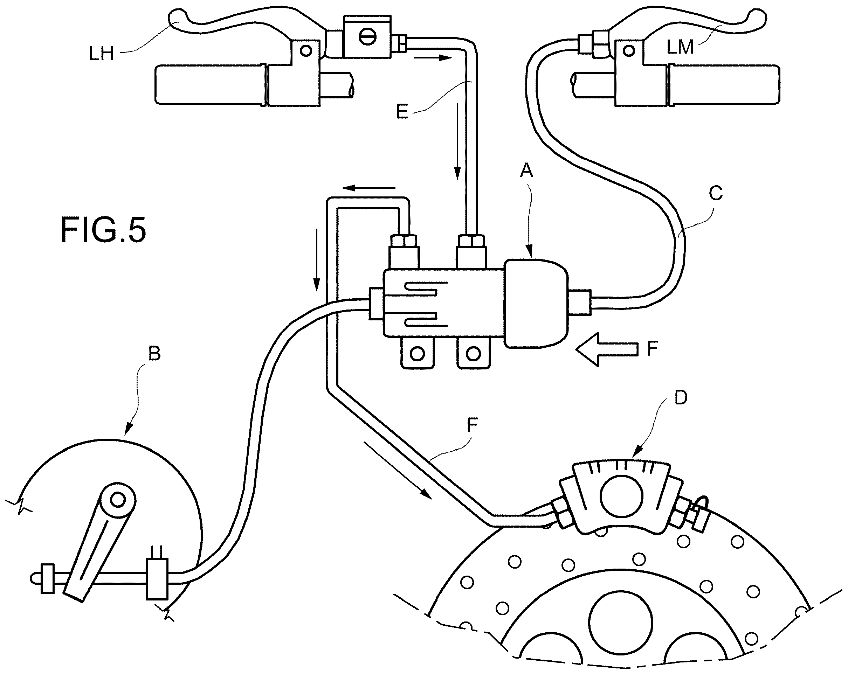

Referring initially to the diagram of FIG. 5, an integral braking system (or combined front-rear braking system) of a motorcycle includes a hydraulically actuated disc-type front brake D and a mechanically-actuated drum-type rear brake B. A mechanical cable C is controlled by a first mechanical LM control, while a second hydraulic LH control operates exclusively the front brake D through a hydraulic conduit E. Designated at A is a hydraulic actuator which receives the fluid from the second control LH command, is crossed and controlled by the mechanical cable C, and sends the hydraulic fluid for actuating the front brake D through a duct F. The flow of fluid to the front brake D through the duct F can be caused by the actuation of the hydraulic control LH, or by the operation of the LM manual control, or by a simultaneous actuation of both the LH hydraulic and LM mechanical controls. The mechanical control LM activates simultaneously the rear brake B and the front brake D. The type of control, with a manual lever (as shown) or with a pedal, is not to be considered as limiting.

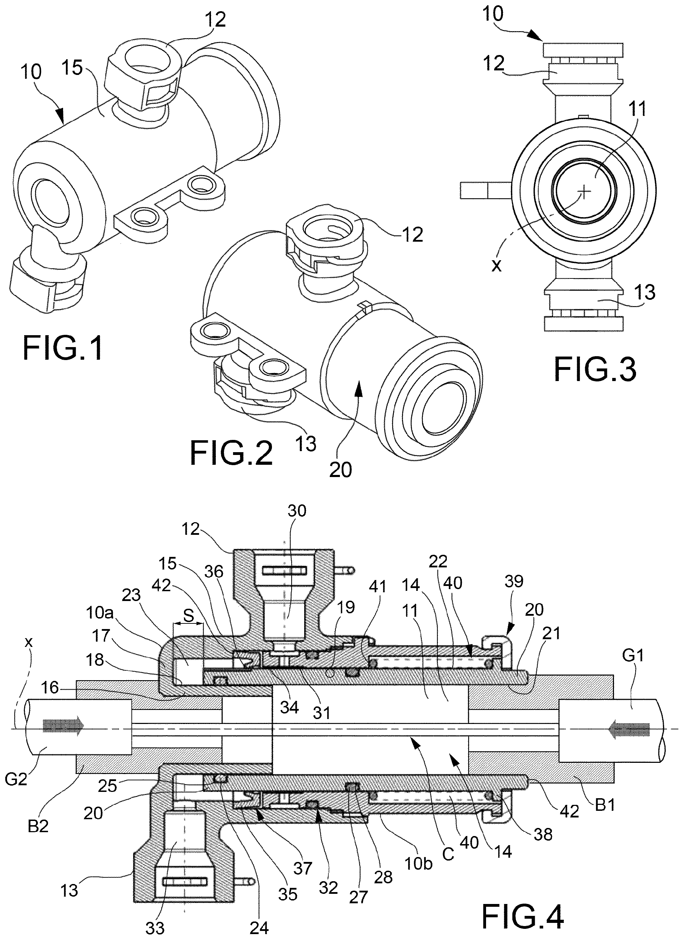

With reference to figures 1 to 4, reference number 10 designates as a whole the body of a hydraulic actuator A for an integral braking system of a motorcycle. The actuator body 10 has a through cavity 11, which extends through the body 10 in a direction defined herein longitudinal or axial, with reference to a central longitudinal axis x.

A mechanical cable C for driving a rear motorcycle brake passes centrally and longitudinally through the cavity 11.

As used herein, terms and expressions indicating orientations such as "longitudinal" or "axial" and "transversal" or "radial" are to be construed as referring to the longitudinal axis x of the actuator body, which coincides with the direction of movement of the mechanical drive cable C.

In its entirety, the actuator body 10 may have an overall cylindrical shape. For constructional reasons, the actuator body 10 may conveniently be composed of several coupled and complementary parts. In the illustrated example, the body 10 comprises a main body 10a, of overall tubular shape, associated with a complementary body 10b, of substantially tubular shape. The complementary body 10b may be mechanically fixed, for example by welding, or by means of a bayonet connection, to the main body 10a.

The main body 10a forms an inlet fitting 12, and a delivery fitting 13. Both fittings 12, 13 may be transversally or radially oriented with respect to the longitudinal axis x of the actuator body 10. The inlet fitting receives the brake fluid arriving from the LH control of the front brake. The delivery fitting is preferably formed at one end of the actuator body 10, and may be hydraulically connected to the front brake calliper D.

The main body 10a may form an outer cylindrical portion 15 and, at one end thereof, a radially inner tubular end portion 16, which extends coaxially inside the outer cylindrical portion 15 and is connected thereto by a transversal connecting wall 17, substantially radial with respect to the x axis. The tubular end portion 16 provides a first cylindrical surface 18, coaxial to the x axis.

The actuator body provides a second cylindrical surface 19, formed in this example by the complementary body 10b, coaxial with the first cylindrical surface 18 and radially external with respect thereto.

A tubular piston 20 is slidably mounted in the cavity 11 of the body 10, coaxially with the first and second surfaces 18, 19. The tubular piston 20 has a radially inner surface 21 engaged and guided axially slidingly by the first cylindrical surface 18, and a radially outer surface 22 engaged and guided slidingly in an axial direction by the second cylindrical surface 19. The tubular piston 20 forms an axially extending through cavity 14 which allows the passage of the cable C.

A hydraulic chamber 23 is defined in the main body 10a of the actuator between the outer cylindrical portion 15, the radially inner tubular end portion 16 and the connecting transversal wall 17. The tubular piston 20 is partially inserted into the hydraulic chamber 23.

A sliding contact sealing gasket 24 is provided at the interface between the tubular piston 20 and the first cylindrical surface 18. In the illustrated example, the gasket 24 is an O-ring gasket, housed in an annular groove 25 formed in the inner cylindrical surface 21 of the tubular piston 20, near a delivery end of the tubular piston, towards the transversal wall 17.

A sliding contact sealing gasket 27 is provided at the interface between the tubular piston 20 and the second cylindrical surface 19 of the actuator body 10. In the illustrated example, the gasket 27 is an O-ring type gasket, received in an annular groove 28 formed in an outer cylindrical surface 22 of the tubular piston 20.

An inlet duct 30 for the brake fluid is formed in the inlet fitting 12, passes through the complementary body 10b, and opens onto a cylindrical portion 31 of an enlarged diameter of the second cylindrical surface 19.

The hydraulic chamber 23 is in fluid communication with the inlet duct 30 and with a delivery duct 33 formed in the delivery fitting 13.

A static seal 32 is arranged at the interface between the main body 10a and the complementary body 10b.

The cylindrical portion of enlarged diameter 31 forms a cylindrical gap 34 with the outer cylindrical surface 22 of the tubular piston 20. The cylindrical gap 34 opens onto the hydraulic chamber 23 and is sealed, on the side opposite to the hydraulic chamber 23, by the sliding contact sealing gasket 27.

A sliding contact sealing gasket 37 is mounted in the actuator body between the inlet duct 30 and the hydraulic chamber 23, in this example immediately downstream of the cylindrical gap 34, between the main body 10a and the complementary body 10b.

The gasket 37 has advantageously a V-shaped cross-section. The gasket 37 has a radially outer portion 35 at an axially fixed position resting against a transversal step 42 formed by the cylindrical portion 15, and a radially inner conical lip 36 which elastically diverges and presses against the outer cylindrical surface 22 of the tubular piston 20.

A radial relief 38 protrudes from the outer cylindrical surface of the tubular piston 20 to engage, in a retracted or passive position of the tubular piston 20, against a stop or stopping element 39 integral with the actuator body. Preferably, the stopping element 39 is a separate stop ring mounted on the actuator body. In addition to acting as a stopping element for the tubular piston 20, the stopping element can advantageously serve as an assembly element for retaining the piston on the actuator.

An elastic contrast element 40 is interposed between the tubular piston 20 and the actuator body 10, to urge the tubular piston 20 towards the passive or retracted position. In the illustrated embodiment, the elastic element 40 is an axially compressed helical spring, arranged around a portion of the external cylindrical surface 22 of the tubular piston 20 and axially interposed between the radial relief 38 and a radial shoulder 41 of the complementary actuator body 10b.

The cable C is received slidably upstream of the actuator A (from the side towards the LM control for the rear brake), in a first sheath G1 associated in a thrust relationship to the tubular piston 20. Preferably, the first sheath G1 is mechanically secured in an axial direction to the tubular piston 20. In the illustrated example, the first sheath G1 is fixed to a first bush B1 which is engaged, in an axial thrust relationship, against a transversal side 42 of the tubular piston 20. The first bush B1 may be axially fixed to the tubular piston 20, for example screwed into the end portion of the tubular piston 20 on the side opposite the hydraulic chamber 23.

Downstream of the actuator, on the side of the mechanical rear brake B, the cable C is slidably received in a second stationary sheath G2, associated in an axial thrust relationship to the actuator body, preferably mechanically constrained to the actuator body. In the illustrated example, the second sheath G2 is fixed to a second bush B2, which may be fixed axially to the actuator body, for example constrained by screwing inside the tubular end portion 16.

When the motorcycle control LH is actuated to operate the hydraulic front brake D, the brake fluid reaches the actuator body 10 from the inlet duct 30, enters the cylindrical gap 34 and causes the radially inner lip to deflect in a radially external direction 36, enters the hydraulic chamber 23 and from there passes into the delivery duct 33. The stroke of the piston 20 is designated at S in Figure 4.

The actuation of the rear brake also simultaneously triggers the operation of the front hydraulic brake by means of the actuator A. By acting on the LM control for actuating the rear brake, the cable C is pulled to the right, with reference to Figure 4, and the first sheath G1 simultaneously moves to the left. Initially, the actuator is in the rest position shown in Figure 4. The tubular piston 20 is retracted to the right in its passive end-of-stroke position, with the radial relief 38 abutting against the stopping element 39. The traction exerted on cable C causes it to slide to the right (figure 4), thus activating the rear mechanical brake. The first sheath G1, sliding towards the left (figure 4), urges the tubular piston 20 making it penetrate further into the hydraulic chamber 23, thereby reducing the chamber volume. Part of the brake fluid which fills the chamber 23 is forced out of the delivery duct 33, thus also activating the front hydraulic brake, simultaneously with the rear mechanical brake. The actuation or delivery movement of the hydraulic piston 20 occurs in contrast to the elastic element 40.

The overpressure caused by the delivery movement of the tubular piston 20 does not cause a reflux of the brake fluid to the intake duct 30, since the pressure of the brake fluid in the hydraulic chamber 23 pushes the radially inner lip 36 of the sealing gasket 37 against the surface external of the tubular piston 20, tending to widen the "V" of gasket 37. The conical shape of the lip 36 does not prevent the introduction of a possible simultaneous flow of delivery coming from the intake duct 30, in the case where also the lever of the front hydraulic brake control has been actuated simultaneously with the rear brake control lever.

By releasing the cable C, the elastic element 40 cooperates to bring the cable back into the passive position. The arrangement of the elastic element allows a sizing from time to time adapted to provide the required elastic force.

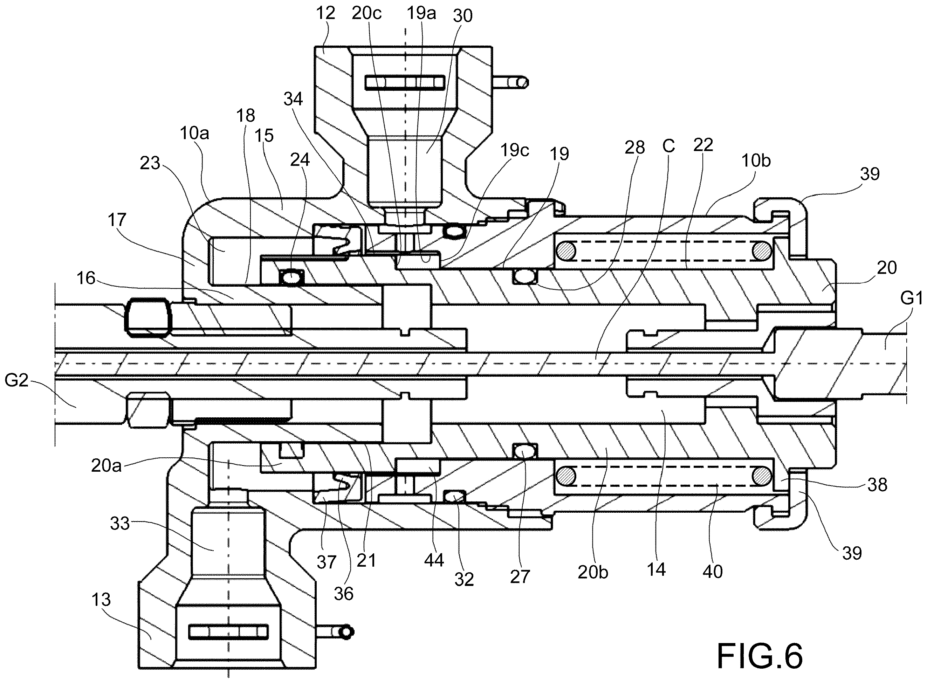

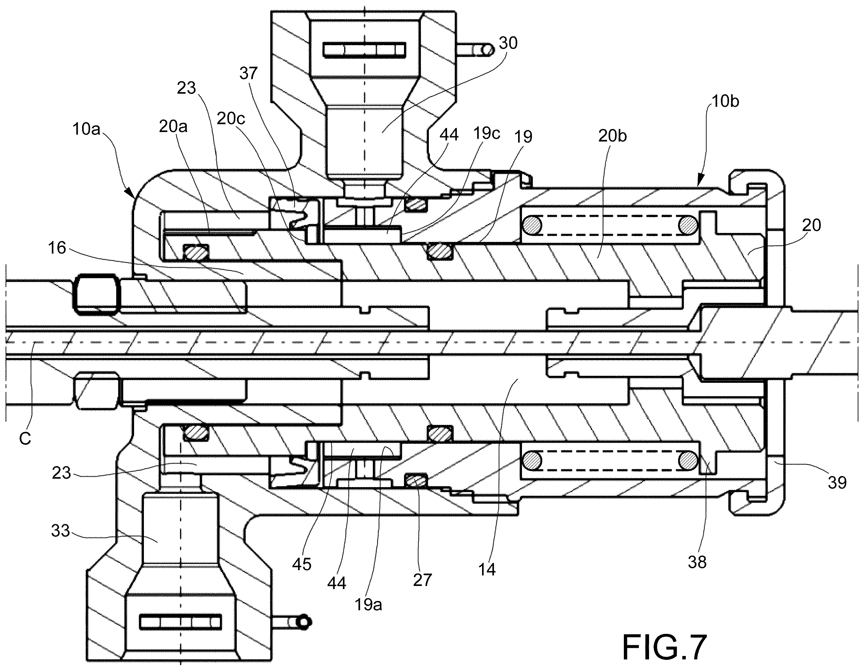

Reference is now made to the embodiment illustrated in Figures 6 and 7, in which only those elements which differ from the embodiment of Figure 4 are described in detail. In the embodiment of Figures 6 and 7, the tubular piston 20 is a double-diameter piston, slidably mounted in a double-diameter cylindrical cavity formed by the actuator body 10. The double-diameter piston and the double-diameter cylindrical cavity define a second hydraulic chamber 44 between them, in fluid communication with the hydraulic chamber 23. The inlet duct 30 opens onto the second hydraulic chamber 44.

The tubular piston 20 has a larger diameter portion 20a, a smaller diameter portion 20b, and a transversal surface 20c, which connects the larger diameter portion 20a with the smaller diameter portion 20b. Preferably, the transversal surface 20c is oriented in a radial plane, perpendicular to the longitudinal axis x.

The double-diameter cylindrical cavity formed by the actuator body comprises:
the cylindrical surface 19 in which the smaller diameter portion 20b of the tubular piston engages smoothly,
a cylindrical surface 19a, having a larger diameter than that of the cylindrical surface 19,
a radial surface 19c.

The larger diameter portion 20a of the piston is slidably engaged in the larger diameter cylindrical surface 19a. As shown in Figure 6, the intake duct 30 opens on the larger diameter cylindrical surface 19a.

More particularly, the second hydraulic chamber 44 is defined by a radially outer cylindrical surface 45 of the smaller diameter portion 20b of the piston, the transversal surface 20c of the piston, the larger diameter cylindrical surface 19a of the actuator body 10, and the radial surface 19c of the actuator body 10.

A sliding contact sealing gasket 27 is provided at the interface between the smaller diameter portion 20b of the tubular piston 20 and the second cylindrical surface 19 of the actuator body 10. In the illustrated example, the gasket 27 is an O-ring type gasket, received in an annular groove 28 formed in an outer cylindrical surface 22 of the tubular piston 20.

The larger diameter cylindrical portion 20a of the tubular piston forms a cylindrical gap 34 with the larger diameter cylindrical surface 19a, through which the brake fluid coming from the inlet duct 30 and the second hydraulic chamber 44 may flow into the hydraulic chamber 23.

The operation of the embodiment of Figures 6 and 7 is as follows. Figure 6 illustrates the actuator in a released condition of the brakes. When the motorcycle control LH is operated to actuate the hydraulic front brake D, the brake fluid reaches the actuator body 10 from the intake duct 30, enters the second hydraulic chamber 44, passes into the cylindrical gap 34 and, causing the radially inner lip 36 of the seal 37 to deflect in a radially outer direction, enters the hydraulic chamber 23 and from there passes into the delivery duct 33. In this purely hydraulic drive mode, the tubular piston 20 does not move.

By acting on the LM control for actuating the rear brake, the cable C is pulled to the right and the tubular piston is axially moved by putting the hydraulic chamber 23 under pressure and causing also the braking action of the hydraulic front brake D, as described herein above with reference to the embodiment of Figure 4.

If, during operation of the rear mechanical brake, the lever LH of the hydraulic brake is also actuated, the pressure of the fluid introduced into the second hydraulic chamber 44 acts on the transversal surface 20c of the tubular piston 20, moving the tubular piston further to the left. The movement of the piston to the left, and its further penetration into the hydraulic chamber 23, further increases the pressure in the hydraulic chamber 23 and increases the efficiency of the braking action.

The displacement of the piston 20 due to the pressure in the second hydraulic chamber 44 may take place substantially without the passage of further fluid from the second hydraulic chamber 44 to the hydraulic chamber 23, due to the sealing gasket 37. In fact, the pressure of the brake fluid in the chamber hydraulic 23 urges the radially inner lip 36 of the seal 37 against the outer cylindrical surface of the larger diameter portion 20a of the tubular piston.

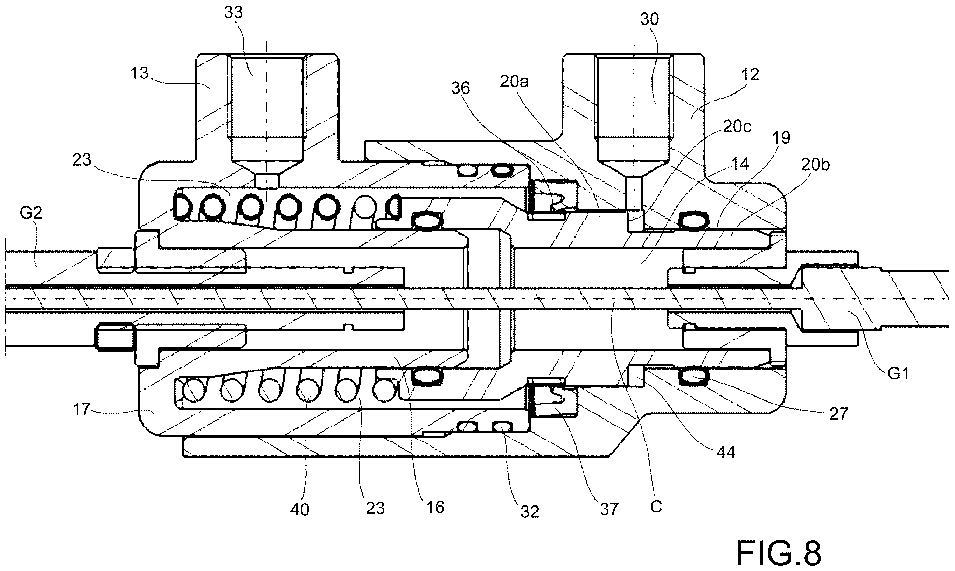

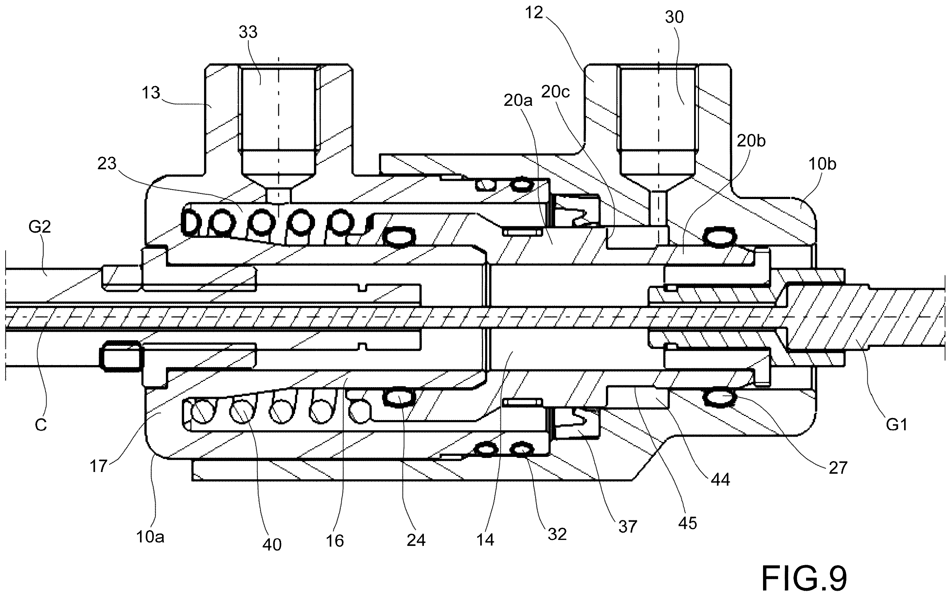

Reference is now made to the embodiment illustrated in Figures 8 and 9, which differs from the embodiment of Figures 6 and 7, in that the resilient element 40 is housed in the hydraulic chamber 23. The fittings 13 and 12 in this example, they are formed by two respective coupled portions 10a, 10b, forming together the actuator body 10. The elastic element 40, axially interposed between the tubular piston 20 and the actuator body 10, urges the tubular piston 20 towards the passive or retracted position, when the brakes are released (Figure 8).

In the embodiment of Figures 8 and 9, which has a particular axial compactness, the elastic element 40 is an axially compressed helical spring, arranged in the hydraulic chamber 23 around the radially inner tubular portion 16. The elastic element 40 rests against the transversal wall 17, and urges one end of the tubular piston 20 in a direction away from the hydraulic chamber 23.

Also in the embodiment of Figures 8 and 9, the tubular piston 20 is a double-diameter piston, slidably mounted in a double-diameter cylindrical cavity formed by the actuator body 10. A seal 37 is interposed between the hydraulic chamber 23 and the second hydraulic chamber 44. A transversal surface 20c connects the larger diameter portion 20a with the smaller diameter portion 20b of the tubular piston 20.

When the rear mechanical brake is released (Figure 8), the actuation of the hydraulic brake causes the brake fluid to enter through the inlet duct 30 in the second hydraulic chamber 44. The gasket 37 allows the fluid to pass from the second chamber 44 to the hydraulic chamber 23, and from here to the brake caliper through the delivery duct 33.

The actuation of the rear brake by means of the mechanical cable C causes a displacement of the tubular piston 20, which penetrates more deeply into the hydraulic chamber 23, causing an overpressure which acts on the front hydraulic brake.

The operation of the hydraulic brake control lever LH, simultaneous to the operation of the mechanical brake control lever LM, causes the fluid pressure introduced into the second hydraulic chamber 44 to act on the transversal surface 20c of the tubular piston 20, moving the tubular piston 20 further to the left. The further movement of the piston to the left, and its further penetration into the hydraulic chamber 23, further increases the pressure in the hydraulic chamber 23 and increases the braking efficiency.

As for the embodiment of Figures 6 and 7, also in the variant of Figures 8 and 9 the displacement of the piston 20 due to the pressure in the second hydraulic chamber 44 can take place without a meaningful passage of further fluid from the second hydraulic chamber 44 to the chamber hydraulic 23, due to the seal 37.

## Claims

1. A hydraulic actuator for a combined rear-front braking system of a motorcycle, the actuator comprising:
an actuator body (10) having an axially extending through cavity (11);
at least one hydraulic chamber (23) within the actuator body (10);
an inlet duct (30) in fluid communication with the hydraulic chamber (23), for letting a brake fluid into the hydraulic chamber (23);
a delivery duct (33) in fluid communication with the hydraulic chamber (23), for sending brake fluid from the hydraulic chamber to a front hydraulic brake of the motorcycle;
a tubular piston (20) mounted coaxially slidable in the through cavity (11) of the actuator body (10), the tubular piston being at least partially inserted into the hydraulic chamber (23), and having an axially extending through cavity (14) for the passage of a mechanical cable (C) for actuating a rear brake of the motorcycle;
wherein the actuator body (10) comprises a main body (10a) of overall tubular shape, associated with a complementary body (10b) of substantially tubular shape; wherein the hydraulic actuator comprises:
an outer portion (15) of the main body (10a);
**characterised in that** the hydraulic actuator further comprises:
a radially inner tubular end portion (16) of the main body (10a) extending inside the outer portion (15) coaxial with the tubular piston (20);
a transversal wall (17) of the main body (10a) connecting the outer portion (15) to the radially inner tubular end portion (16);
wherein the hydraulic chamber (23) is formed between said outer portion (15), said radially inner tubular end portion (16) and said transversal wall (17).

2. A hydraulic actuator according to claim 1, wherein:
the radially inner tubular end portion (16) provides a first axial cylindrical surface (18),
the actuator body (10) provides a second cylindrical surface (19) coaxial with the first cylindrical surface (18) and radially external with respect thereto, and
the tubular piston (20) provides a radially inner surface (21) engaged and axially slidingly guided by the first cylindrical surface (18), and a radially outer cylindrical surface (22) engaged and axially slidingly guided by the second cylindrical surface (19).

3. A hydraulic actuator according to claim 1 or 2, comprising a sliding contact sealing gasket (37) mounted in the actuator body between the inlet duct (30) and the hydraulic chamber (23), the sliding contact sealing gasket (37) having a V-shaped axial section and providing
a radially outer portion (35) arranged in an axially fixed position in the actuator body, and
a radially inner conical lip (36) adapted to slide against an outer cylindrical surface (22, 20a) of the tubular piston (20).

4. A hydraulic actuator according to any one of the preceding claims, comprising a radial relief (38) projecting from an outer cylindrical surface (22) of the tubular piston and adapted to abut, in a retracted end-of-stroke position of the tubular piston (20), against a stopping element (39) integral with the actuator body.

5. A hydraulic actuator according to claim 4, wherein the stopping element (39) is a stopping ring mounted on the actuator body (10).

6. A hydraulic actuator according to any one of the preceding claims, comprising an opposing spring element (40) interposed between the tubular piston (20) and the actuator body (10), for urging the tubular piston (20) away from the chamber hydraulic (23).

7. A hydraulic actuator according to claim 6, wherein the opposing spring element (40) is an axially compressed helical spring arranged around a portion of an outer cylindrical surface (22) of the tubular piston (20) and is axially interposed between a radial relief (38) projecting from the outer cylindrical surface (22) of the tubular piston (20) and a radial shoulder (41) of the actuator body.

8. A hydraulic actuator according to claim 6, wherein the opposing spring element (40) is an axially compressed helical spring, which is arranged around the radially inner tubular end portion (16), rests against the transversal wall (17) and urges one end of the tubular piston (20) in a direction away from the hydraulic chamber (23).

9. A hydraulic actuator according to any one of the preceding claims, wherein:
the tubular piston (20) is a double-diameter piston, slidably mounted in a double-diameter cylindrical cavity (19, 19a) formed by the actuator body (10);
the double-diameter tubular piston (20) and the double-diameter cylindrical cavity (19, 19a) define a second hydraulic chamber (44), in fluid communication with the hydraulic chamber (23);
the inlet duct (30) opens on the second hydraulic chamber (44).

10. A hydraulic actuator according to claim 9, wherein the tubular piston (20) has
a larger diameter piston portion (20a), which is slidably engaged a larger diameter cylindrical surface (19a) of the double-diameter cylindrical cavity of the actuator body (10),
a smaller diameter piston portion (20b), which is slidably engaged in a smaller diameter cylindrical surface (19) of the double-diameter cylindrical cavity of the actuator body (10), and
a transversal surface (20c), which connects the larger diameter portion (20a) with the smaller diameter portion (20b) of the tubular piston (20).

11. A hydraulic actuator according to claim 10, wherein the transversal surface (20c) of the tubular piston (20) is oriented in a radial plane, perpendicular to a longitudinal axis (x) of the through cavity (11) of the actuator body (10).

12. A hydraulic actuator according to claim 10, wherein the inlet duct (30) opens on the larger diameter cylindrical surface (19a) of the double-diameter cylindrical cavity of the actuator body (10).

13. A hydraulic actuator according to claims 3, 9 and 10, wherein
the sliding contact sealing gasket (37) is mounted in the actuator body between the hydraulic chamber (23) and the second hydraulic chamber (44), and
the radially inner conical lip (36) slides against an outer cylindrical surface of the larger diameter piston portion (20a).

## Patentansprüche

1. Hydraulischer Aktuator für ein kombiniertes Heck-Front-Bremssystem eines Motorrads, wobei der Aktuator aufweist:
einen Aktuatorkörper (10) mit einem axial verlaufenden durchgängigen Hohlraum (11);
mindestens eine Hydraulikkammer (23) innerhalb des Aktuatorkörpers (10);
einen Einlasskanal (30) in fluidischer Kommunikation mit der Hydraulikkammer (23), um eine Bremsflüssigkeit in die Hydraulikkammer (23) zu lassen;
einen Zufuhrkanal (33) in fluidischer Kommunikation mit der Hydraulikkammer (23) zum Senden von Bremsflüssigkeit von der Hydraulikkammer an eine vordere Hydraulikbremse des Motorrads;
einen rohrförmiger Kolben (20), der koaxial verschieblich in dem durchgängigen Hohlraum (11) des Aktuatorkörpers (10) montiert ist, wobei der rohrförmige Kolben mindestens teilweise in der Hydraulikkammer (23) eingeführt ist und einen axial verlaufenden durchgängigen Hohlraum (14) für die Durchführung eines mechanischen Kabels (C) zum Betätigen einer Heckbremse des Motorrads aufweist;
wobei der Aktuatorkörper (10) einen Hauptkörper (10a) mit insgesamt rohrförmiger Form aufweist, der einem Ergänzungskörper (10b) mit im Wesentlichen rohrförmiger Form zugeordnet ist; wobei der hydraulische Aktuator aufweist:
einen äußeren Abschnitt (15) des Hauptkörpers (10a);
**dadurch gekennzeichnet, dass** der hydraulische Aktuator ferner aufweist:
einen radial inneren, rohrförmigen Endabschnitt (16) des Hauptkörpers (10a), der sich innerhalb des äußeren Abschnitts (15) koaxial zu dem rohrförmigen Kolben (20) erstreckt;
eine transversale Wand (17) des Hauptkörpers (10a), welche den äußeren Abschnitt (15) mit dem radial inneren rohrförmigen Endabschnitt (16) verbindet;
wobei die Hydraulikkammer (23) zwischen dem äußerem Abschnitt (15), dem radial inneren rohrförmigen Endabschnitt (16) und der transversalen Wand (17) gebildet ist.

2. Hydraulischer Aktuator nach Anspruch 1, wobei:
der radial innere rohrförmige Endabschnitt (16) eine erste axiale zylindrische Oberfläche (18) bereitstellt,
der Aktuatorkörper (10) eine zweite zylindrische Oberfläche (19) bereitstellt, welche koaxial mit der ersten zylindrischen Oberfläche (18) und radial außerhalb in Bezug auf diese ist, und
der rohrförmige Kolben (20) eine radial innere Oberfläche (21), die durch die erste zylindrische Oberfläche (18) in Eingriff genommen und axial gleitend durch diese geführt wird, und eine radial äußere zylindrische Oberfläche (22) bereitstellt, die durch die zweite zylindrische Oberfläche (19) in Eingriff genommen und axial gleitend durch diese geführt wird.

3. Hydraulischer Aktuator nach Ansprüche 1 oder 2, aufweisend eine Gleitkontaktverschlussdichtung (37), die zwischen dem Einlasskanal (30) und der Hydraulikkammer (23) in dem Aktuatorkörper montiert ist, wobei die Gleitkontaktverschlussdichtung (37) einen V-förmigen Axialabschnitt aufweist und bereitstellt:
einen radial äußeren Abschnitt (35), der in einer axial fixierten Position in dem Aktuatorkörper angeordnet ist, und
eine radial innere Lippe (36), die angepasst ist, um sich gegen eine äußere zylindrische Oberfläche (22, 20a) des rohrförmigen Kolbens (20) zu verschieben.

4. Hydraulischer Aktuator nach einem der vorhergehenden Ansprüche, aufweisend einen radialen Vorsprung (38), der von einer äußeren zylindrischen Oberfläche (22) des rohrförmigen Kolbens vorsteht und angepasst ist, um in einer eingezogenen Endhub-Position des rohrförmigen Kolbens (20) an einem Anschlagelement (39) anzuliegen, das integral mit dem Aktuatorkörper ist.

5. Hydraulischer Aktuator nach Anspruch 4, wobei das Anschlagelement (39) ein Anschlagring ist, der an dem Aktuatorkörper (10) montiert ist.

6. Hydraulischer Aktuator nach einem der vorhergehenden Ansprüche, aufweisend ein Gegenfederelement (40), das sich zwischen dem rohrförmigen Kolben (20) und dem Aktuatorkörper (10) befindet, um den rohrförmigen Kolben (20) von der Hydraulikkammer (23) wegzudrängen.

7. Hydraulischer Aktuator nach Anspruch 6, wobei das Gegenfederelement (40) eine axial komprimierte Spiralfeder ist, die um einen Abschnitt einer äußeren zylindrischen Oberfläche (22) des rohrförmigen Kolbens (20) herum angeordnet ist und sich axial zwischen einem radialen Vorsprung (38), der von der äußeren zylindrischen Oberfläche (22) des rohrförmigen Kolbens (20) vorsteht, und einer radialen Schulter (41) des Aktuatorkörpers befindet.

8. Hydraulischer Aktuator nach Anspruch 6, wobei das Gegenfederelement (40) eine axial komprimierte Spiralfeder ist, die um den radial inneren rohrförmigen Endabschnitt (16) angeordnet ist, an der transversalen Wand (17) anliegt und ein Ende des rohrförmigen Kolbens (20) in eine Richtung weg von der Hydraulikkammer (23) drängt.

9. Hydraulischer Aktuator nach einem der vorstehenden Ansprüche, wobei:
der rohrförmige Kolben (20) ein Differentialkolben ist, der verschieblich in einem zylindrischen Differentialkolbenhohlraum (19, 19a) montiert ist, die von dem Aktuatorkörper (10) gebildet wird;
der rohrförmige Differentialkolben (20) und der zylindrische Differentialkolbenhohlraum (19, 19a) eine zweite Hydraulikkammer (44) in fluidischer Kommunikation mit der Hydraulikkammer (23) definieren;
der Einlasskanal (30) in der zweiten Hydraulikkammer (44) mündet.

10. Hydraulischer Aktuator nach Anspruch 9, wobei der rohrförmige Kolben (20) aufweist:
einen Kolbenabschnitt mit größerem Durchmesser (20a), welcher verschieblich mit einer zylindrischen Oberfläche größeren Durchmessers (19a) des Differentialkolbenhohlraums des Aktuatorkörpers (10) in Wirkverbindung steht,
einen Kolbenabschnitt kleineren Durchmesser (20b), welcher verschieblich in einer zylindrischen Oberfläche kleineren Durchmessers (19) der Differentialkolbenkavität des Aktuatorkörpers (10) in Wirkverbindung steht, und
eine transversale Oberfläche (20c), die den Abschnitt größeren Durchmessers (20a) mit dem Abschnitt kleineren Durchmessers (20b) des rohrförmigen Kolbens (20) verbindet.

11. Hydraulischer Aktuator nach Anspruch 10, wobei die transversale Oberfläche (20c) des rohrförmigen Kolbens (20) in einer radialen Ebene ausgerichtet ist, senkrecht zu einer Längsachse (x) des durchgängigen Hohlraums (11) des Aktuatorkörpers (10).

12. Hydraulischer Aktuator nach Anspruch 10, wobei der Einlasskanal (30) in der zylindrischen Oberfläche größeren Durchmessers (19a) des Differentialkolbenhohlraums des Aktuatorkörpers (10) mündet.

13. Hydraulischer Aktuator nach Ansprüchen 3, 9 und 10, wobei
die Gleitkontaktverschlussdichtung (37) in dem Aktuatorkörper (10) zwischen der Hydraulikkammer (23) und der zweiten Hydraulikkammer (44) montiert ist, und
die radial innere kegelförmige Lippe (36) sich gegen eine äußere zylindrische Oberfläche des Kolbenabschnitts größeren Durchschnitts (20a) verschiebt.

## Revendications

1. Actionneur hydraulique pour un système de freinage combiné arrière-avant d'une motocyclette, l'actionneur comprenant :
un corps d'actionneur (10) ayant une cavité traversante (11) s'étendant axialement ;
au moins une chambre hydraulique (23) dans le corps d'actionneur (10) ;
une conduite d'entrée (30) en communication fluidique avec la chambre hydraulique (23), pour laisser passer un liquide de frein dans la chambre hydraulique (23) ;
une conduite de refoulement (33) en communication fluidique avec la chambre hydraulique (23), pour envoyer un liquide de frein de la chambre hydraulique à un frein hydraulique avant de la motocyclette ;
un piston tubulaire (20) monté de façon coaxialement coulissante dans la cavité traversante (11) du corps d'actionneur (10), le piston tubulaire étant au moins partiellement inséré dans la chambre hydraulique (23), et ayant une cavité traversante (14) s'étendant axialement pour le passage d'un câble mécanique (C) pour actionner un frein arrière de la motocyclette ;
dans lequel le corps d'actionneur (10) comprend un corps principal (10a) d'une forme tubulaire globale, associé à un corps complémentaire (10b) de forme sensiblement tubulaire ; dans lequel l'actionneur hydraulique comprend :
une partie extérieure (15) du corps principal (10a) ;
**caractérisé en ce que** l'actionneur hydraulique comprend en outre :
une partie d'extrémité tubulaire radialement intérieure (16) du corps principal (10a) s'étendant à l'intérieur de la partie extérieure (15) coaxiale avec le piston tubulaire (20) ;
une paroi transversale (17) du corps principal (10a) reliant la partie extérieure (15) à la partie d'extrémité tubulaire radialement intérieure (16);
dans lequel la chambre hydraulique (23) est formée entre ladite partie extérieure (15), ladite partie d'extrémité tubulaire radialement intérieure (16) et ladite paroi transversale (17).

2. Actionneur hydraulique selon la revendication 1, dans lequel :
la partie d'extrémité tubulaire radialement intérieure (16) fournit une première surface cylindrique (18) axiale,
le corps d'actionneur (10) fournit une seconde surface cylindrique (19) coaxiale avec la première surface cylindrique (18) et externe radialement par rapport à celle-ci, et
le piston tubulaire (20) fournit une surface intérieure radialement (21) mise en prise et guidée de manière glissante axialement par la première surface cylindrique (18), et une surface cylindrique extérieure (22) radialement mise en prise et guidée de manière glissante axialement par la seconde surface cylindrique (19).

3. Actionneur hydraulique selon la revendication 1 ou 2, comprenant un joint d'étanchéité à contact glissant (37) monté dans le corps d'actionneur entre la conduite d'entrée (30) et la chambre hydraulique (23), le joint d'étanchéité à contact glissant (37) ayant une coupe axiale en forme de V et fournissant
une partie radialement extérieure (35) agencée dans une position fixe axialement dans le corps d'actionneur, et
une lèvre conique radialement intérieure (36) adaptée pour glisser contre une surface cylindrique extérieure (22, 20a) du piston tubulaire (20).

4. Actionneur hydraulique selon l'une quelconque des revendications précédentes, comprenant un relief radial (38) faisant saillie à partir d'une surface cylindrique extérieure (22) du piston tubulaire et adapté pour buter, dans une position de fin de course rétractée du piston tubulaire (20), contre un élément d'arrêt (39) d'un seul bloc avec le corps d'actionneur.

5. Actionneur hydraulique selon la revendication 4, dans lequel l'élément d'arrêt (39) est une bague d'arrêt montée sur le corps d'actionneur (10).

6. Actionneur hydraulique selon l'une quelconque des revendications précédentes, comprenant un élément ressort opposé (40) interposé entre le piston tubulaire (20) et le corps d'actionneur (10), pour pousser le piston tubulaire (20) loin de la chambre hydraulique (23).

7. Actionneur hydraulique selon la revendication 6, dans lequel l'élément ressort opposé (40) est un ressort hélicoïdal comprimé axialement agencé autour d'une partie d'une surface cylindrique extérieure (22) du piston tubulaire (20) et est interposé axialement entre un relief radial (38) faisant saillie à partir de la surface cylindrique extérieure (22) du piston tubulaire (20) et un épaulement radial (41) du corps d'actionneur.

8. Actionneur hydraulique selon la revendication 6, dans lequel l'élément ressort opposé (40) est un ressort hélicoïdal comprimé axialement qui est agencé autour de la partie d'extrémité tubulaire radialement intérieure (16), appuie contre la paroi transversale (17) et pousse une extrémité du piston tubulaire (20) dans une direction opposée à la chambre hydraulique (23).

9. Actionneur hydraulique selon l'une quelconque des revendications précédentes, dans lequel :
le piston tubulaire (20) est un piston à double diamètre, monté de manière glissante dans une cavité cylindrique (19, 19a) à double diamètre formée par le corps d'actionneur (10) ;
le piston tubulaire (20) à double diamètre et la cavité cylindrique (19, 19a) à double diamètre définissent une seconde chambre hydraulique (44), en communication fluidique avec la chambre hydraulique (23) ;
la conduite d'entrée (30) s'ouvre sur la seconde chambre hydraulique (44).

10. Actionneur hydraulique selon la revendication 9, dans lequel le piston tubulaire (20) a
une partie (20a) de piston de plus grand diamètre, qui est mise en prise de manière glissante dans une surface cylindrique (19a) de plus grand diamètre de la cavité cylindrique à double diamètre du corps d'actionneur (10),
une partie (20b) de piston de plus petit diamètre, qui est mise en prise de manière glissante dans une surface cylindrique (19) de plus petit diamètre de la cavité cylindrique à double diamètre du corps d'actionneur (10), et
une surface transversale (20c), qui relie la partie (20a) de plus grand diamètre à la partie (20b) de plus petit diamètre du piston tubulaire (20).

11. Actionneur hydraulique selon la revendication 10, dans lequel la surface transversale (20c) du piston tubulaire (20) est orientée dans un plan radial, perpendiculaire à un axe longitudinal (x) de la cavité traversante (11) du corps d'actionneur (10).

12. Actionneur hydraulique selon la revendication 10, dans lequel la conduite d'entrée (30) s'ouvre sur la surface cylindrique (19a) de plus grand diamètre de la cavité cylindrique à double diamètre du corps d'actionneur (10).

13. Actionneur hydraulique selon les revendications 3, 9 et 10, dans lequel
le joint d'étanchéité à contact glissant (37) est monté dans le corps d'actionneur entre la chambre hydraulique (23) et la seconde chambre hydraulique (44), et
la lèvre conique intérieure radialement (36) glisse contre une surface cylindrique extérieure de la partie (20a) de piston de plus grand diamètre.
